# EUROPÄISCHE PATENTSCHRIFT

(11) **EP 2 901 029 B1**
(45) Veröffentlichungstag und Bekanntmachung des Hinweises auf die Patenterteilung: **12.10.2016**
(21) Anmeldenummer: 13753568.8
(22) Anmeldetag: 06.08.2013
(51) Int. Cl.: F16C 29/04, F16C 29/00

(54) **LAGERELEMENT FÜR ZWEI RAUMRICHTUNGEN**
BEARING ELEMENT FOR TWO SPATIAL DIRECTIONS
ÉLÉMENT PALIER POUR DEUX DIRECTIONS SPATIALES

(30) Priorität: 25.09.2012 DE 102012217241
(43) Veröffentlichungstag der Anmeldung: 05.08.2015
(73) Patentinhaber: Schaeffler Technologies AG & Co. KG, 91074 Herzogenaurach (DE)
(72) Erfinder: BAUER, Jörg, 91056 Erlangen (DE); SIEBKE, Peter, 91074 Herzogenaurach (DE); BENDER, Armin, 91074 Herzogenaurach (DE); RUHL, Stefan, 91056 Erlangen (DE)
(86) Internationale Anmeldenummer: PCT/DE2013/200101
(87) Internationale Veröffentlichungsnummer: WO 2014/048423

(56) Entgegenhaltungen:
- EP-A1- 0 072 869
- WO-A1-95/23267
- WO-A1-2004/070228
- CH-A- 389 669

## Beschreibung

### Gebiet der Erfindung

Die Erfindung betrifft ein Lagerelement für zwei Raurnrichtungen, umfassend mindestens eine Abfolge von Rollkörpern, die auf einer Rollfläche abrollen.

Aus der Praxis tritt oft die Forderung auf, geringe Verschiebungen in zwei, beispielsweise senkrecht zu einander stehenden Raumrichtungen der Ebene, die unter einer hohen Last senkrecht zu der Ebene auftreten, abfangen zu können.

Gleitlager bzw. Lager mit Rollkörpern, die nur in einer Richtung rollen, ermöglichen üblicherweise nur die Aufnahme von Kräften in einer Raumrichtung, weisen eine hohe Reibung auf sowie eine geringe Flächenpressung, also auch eine beschränkte Tragfähigkeit in der Richtung senkrecht zu der Ebene der Last.

Ein gattungsgemäßes Lager zeigt CH 389 669.

### Aufgabe der Erfindung

Es ist die Aufgabe der Erfindung, ein Lagerelement für zwei Raumrichtungen anzugeben, das hohe Kräfte senkrecht zu den beiden Raumrichtungen aufnehmen kann und kleinbauend ausgestaltet ist.

### Zusammenfassung der Erfindung

Diese Aufgabe wird erfindungsgemäß gelöst durch ein Lagerelement für zwei Raumrichtungen, umfassend eine Abfolge von ersten Rollkörpern, die auf einer ersten Seite eines Zwischenteils in einer ersten Richtung abrollen, eine Abfolge von zweiten Rollkörpern, die auf einer zweiten Seite des Zwischenteils und auf einem Befestigungsteil in einer zweiten, von der ersten Richtung abweichenden Richtung abrollen, gekennzeichnet dadurch, dass das Befestigungsteil einen Schaft aufweist, und, dass um den Schaft ein Federelement angeordnet ist. Das Zwischenteil, auf dessen beiden Seiten die beiden Reihen der Rollkörper abrollen, bewirkt eine Verteilung der Last, die im wesentlichen gleichmäßig von dem Befestigungsteil aufgenommen wird. Eine Kraft, die senkrecht zu einer durch die beiden Rollrichtungen der beiden Reihen der Rollkörper definierten Ebene auf das Befestigungsteil einwirkt, wird durch das den Schaft umgebende Federelement zumindest teilweise aufgefangen.

Vorzugsweise ist vorgesehen, dass das den Schaft umgebende Federelement eine Tellerfeder oder eine Schraubenfeder umfasst. Insbesondere können mehrere Tellerfeder, auch mehrere Tellerfederpakete vorgesehen sein.

Vorzugsweise ist vorgesehen, dass die ersten und / oder die zweiten Rollkörper als Nadeln ausgebildet sind. Besonders bevorzugt ist vorgesehen, dass sowohl die ersten Rollkörper als auch die zweiten Rollkörper jeweils als Nadeln, insbesondere als Nadeln gleicher Abmessungen, ausgebildet sind, die auf zueinander senkrechten Richtungen an dem gemeinsamen Zwischenteil abrollen.

Vorzugsweise ist vorgesehen, dass die ersten und / oder zweiten Rollkörper von einem Käfig geführt sind. Insbesondere ist bevorzugt vorgesehen, dass für jede der beiden Abfolgen der Rollkörper ein bauartgleicher Käfig, beispielsweise jeweils ein Nadelkäfig gleicher Abmessung, vorgesehen ist.

Vorzugsweise ist vorgesehen, dass das Zwischenteil eben ausgebildet ist.

Weitere Vorteile und Merkmale der Erfindung ergeben sich aus den abhängigen Ansprüchen sowie aus der Beschreibung eines Ausführungsbeispiels.

Die Erfindung wird im Folgenden unter Bezugnahme auf die anliegende Zeichnung näher beschrieben und erläutert.

### Kurze Beschreibung der Figuren

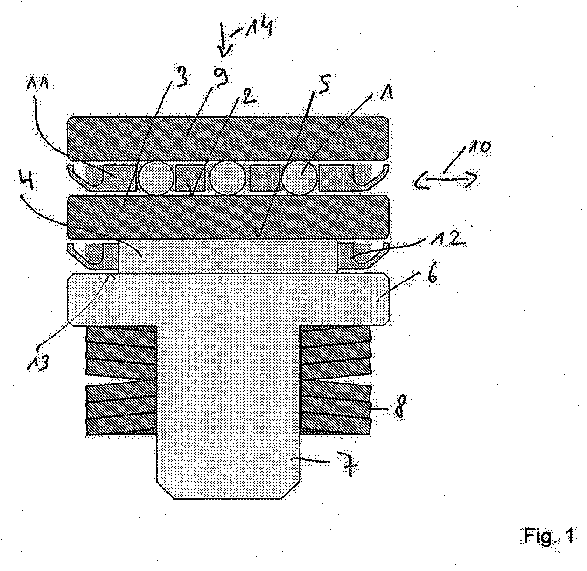

- Fig. 1: zeigt eine teilweise geschnittene Ansicht eines Ausführungsbeispiels eines erfindungsgemäßen Lagerelementes.

### Detaillierte Beschreibung der Figuren

Fig. 1 zeigt ein Lagerelement für zwei Raumrichtungen, umfassend eine Abfolge von ersten Rollkörpern 1, als Nadeln ausgebildet sind, und die auf einer ersten Seite 2 eines Zwischenteils 3 in einer ersten Richtung abrollen, eine Abfolge von zweiten Rollkörpern 4, die ebenfalls als Nadeln, und zwar als zu den ersten Nadeln 1 baugleiche Nadeln ausgebildet sind, wobei die zweiten Nadeln 4 auf einer zweiten Seite 5 des als ebener Zuschnitt ausgebildeten Zwischenteils 3 und auf einem Befestigungsteil 6 in einer zweiten, von der ersten Richtung abweichenden Richtung abrollen, wobei das Befestigungsteil 6 einen Schaft 7aufweist, und wobei um den Schaft 7 ein Federelement 8 angeordnet ist.

Das Federelement 8 umfasst zwei gegeneinander verspannte Pakete von Tellerfedern, die Kräfte in axialer Richtung, also in Richtung der Erstreckung des Schaftes 7, aufnehmen. Der Schaft 7 ist mit seinem Ende in einer Aufnahmebohrung eines Anschlussteils aufgenommen, an dem die mindestens eine Tellerfeder des Federelementes 8 anliegt.

Die Abfolge der ersten Nadeln 1 rollt an der ersten Seite 2 des Zwischenteils 3 sowie an einer gegenüberliegenden Seite eines Befestigungselementes 9 ab, wobei das Befestigungselement 9 entweder direkt mit dem zu lagernden Teil verbunden ist bzw. einen Spalt, beispielsweise einen Fanglägerspalt, ausbildet. Anstelle des Befestigungselementes 9 könnte in einer Abwandlung des dargestellten Ausführungsbeispiels auch vorgesehen sein, dass die ersten Nadeln 1 bzw. die ersten Rollkörper direkt an dem zu lagernden Teil abrollen.

Die ersten Nadeln 1 sind um eine senkrecht zu der Papierebene angeordnete Rollachse drehbar, und zwar in einer ersten Richtung, nämlich in der Darstellung von Fig. 1 in Richtung des Pfeils 10. Die ersten Nadeln 1 sind in einem ersten Käfig 11 geführt, der als Nadelkäfig ausgebildet ist.

Die zweiten Nadeln 4 sind um eine parallel zu der Papierebene angeordnete Rollachse drehbar, und zwar in einer zweiten Richtung, die in der Darstellung von Fig. 1 senkrecht zu der Papierebene liegt. Die zweiten Nadeln 4 sind in einem zweiten Käfig 12 geführt, der baugleich mit dem ersten Käfig 11 ausgebildet ist.

Die zweiten Nadeln 4 rollen an der zweiten Seite 5 des Zwischenteils 3 sowie an einer als Rollebene ausgebildeten ebenen Fläche 13 des im Querschnitt im wesentlichen T-förmigen Befestigungsteils 6 ab, wobei der der Querbalken des T die Rollebene der zweiten Nadeln 4 und der senkrechte Balken des T den Schaft 7 des Befestigungselementes ausbildet.

Die Einheit, gebildet aus dem Befestigungselement 6 mit dem Schaft 7, dem Federelement 8, den beiden Reihen der Nadeln 1, 4, den Käfigen 11, 12 und dem Zwischenteil 3 ist innerhalb einer Aufnahme angeordnet, deren Wandung die Verschiebung der Käfige 11, 12 seitlich begrenzt, so dass eine kompakte, ggf. bereits vormontierte Baueinheit gebildet wird.

Die Baueinheit kann Kräfte senkrecht zu den beiden Richtungen, in die die beiden Reihen der Nadeln 1, 4, beweglich sind, nämlich in Richtung der Erstreckung des Schaftes 7, also in axialer Richtung (Pfeil 14), durch das mindestens eine Federelement 8, das bevorzugt mindestens eine Schraubenfeder oder mindestens eine Tellerfeder umfasst, aufnehmen. Die Nadeln 1, 4 können in zwei zueinander senkrechten Raumrichtungen (Pfeil 10 bzw. senkrecht zu der Papierebene) um jeweils einem gewissen Betrag rollen, also auch senkrecht zu der axialen Richtung (Pfeil 14).

Das vorbeschriebene Lagerelement, bzw. die vorbeschriebene Baueinheit, insbesondere mehrere derartige Lagerelemente bzw. Baueinheiten können beispielsweise als Fanglager oder zur Ergänzung eines als Wälzlager ausgebildeten (beispielsweise axialen) Fanglagers, zum Ausgleich von Wärmedehnungen bei anderen Lagerungen als Loslager oder als Stehlager-Gehäuse vorgesehen sein, insbesondere auch als Widerlager in der Gebäudetechnik.

Bei dem vorstehend beschriebenen Ausführungsbeispiel waren jeweils Käfige 11, 12 zur Führung der Nadeln 1, 4, in der Ebene vorgesehen. Es versteht sich, dass bei mindestens einer Abfolge der Rollkörper, die auch als andere Wälzkörper wie tonnen- oder stumpfkegelige oder zylinderförmige Wälzkörper ausgebildet sein können, insbesondere bei den beiden Abfolgen der Rollkörper, kein Käfig vorgesehen sein muss, so dass in dem obigen Ausführungsbeispiel zwei Abfolgen von vollnadeligen Reihen von Rollkörpern entstehen.

### Bezugszeichenliste

- 1: erste Rollkörper (Nadeln)
- 2: erste Seite des Zwischenteils 3
- 3: Zwischenteil
- 4: zweite Rollkörper (Nadeln)
- 5: zweite Seite des Zwischenteils 3
- 6: Befestigungsteil
- 7: Schaft
- 8: Federelement
- 9: Befestigungselement
- 10: erste Richtung (Pfeil)
- 11: erster Käfig
- 12: zweiter Käfig
- 13: Fläche
- 14: axiale Richtung (Pfeil)

## Patentansprüche

1. Lagerelement für zwei Raumrichtungen, umfassend
eine Abfolge von ersten Rollkörpern (1), die auf einer ersten Seite (2)
eines Zwischenteils (3) in einer ersten Richtung abrollen,
eine Abfolge von zweiten Rollkörpern (4), die auf einer zweiten Seite (5) des Zwischenteils (3) und auf einem Befestigungsteil (6) in einer zweiten, von der ersten Richtung abweichenden Richtung abrollen,
**gekennzeichnet dadurch, dass** das Befestigungsteil (6) einen Schaft (7) aufweist, und, dass um den Schaft (7) ein Federelement (8) angeordnet ist.

2. Lagerelement nach Anspruch 1, **dadurch gekennzeichnet, dass** das den Schaft (7) umgebende Federelement (8) eine Tellerfeder oder eine Schraubenfeder umfasst.

3. Lagerelement nach Anspruch 1 oder 2, **dadurch gekennzeichnet, dass** die ersten und / oder die zweiten Rollkörper (1, 4) als Nadeln ausgebildet sind.

4. Lagerelement nach einem der Ansprüche 1 bis 3, **dadurch gekennzeichnet, dass** die ersten und / oder zweiten Rollkörper (1, 4) von einem Käfig (11, 12) geführt sind.

5. Lagerelement nach einem der Ansprüche 1 bis 4, **dadurch gekennzeichnet, dass** das Zwischenteil (6) eben ausgebildet ist.

## Claims

1. Bearing element for two spatial directions, comprising
a sequence of first rolling bodies (1) which roll on a first side (2) of an intermediate part (3) in a first direction,
a sequence of second rolling bodies (4) which roll on a second side (5) of the intermediate part (3) and on a fastening part (6) in a second direction which differs from the first direction,
**characterized in that** the fastening part (6) has a shank (7), and **in that**
a spring element (8) is arranged around the shank (7).

2. Bearing element according to Claim 1, **characterized in that** the spring element (8) which surrounds the shank (7) comprises a disk spring or a helical spring.

3. Bearing element according to Claim 1 or 2, **characterized in that** the first and/or the second rolling bodies (1, 4) are configured as needles.

4. Bearing element according to one of Claims 1 to 3, **characterized in that** the first and/or second rolling bodies (1, 4) are guided by a cage (11, 12).

5. Bearing element according to one of Claims 1 to 4, **characterized in that** the intermediate part (6) is of planar configuration.

## Revendications

1. Élément de palier pour deux directions spatiales, comprenant
une succession de premiers corps de roulement (1) qui roulent dans une première direction sur un premier côté (2) d'une pièce intermédiaire (3),
une succession de deuxièmes corps de roulement (4) qui roulent dans une deuxième direction s'écartant de la première direction sur un deuxième côté (5) de la pièce intermédiaire (3) et sur une pièce de fixation (6),
**caractérisé en ce que** la pièce de fixation (6) présente une tige (7) et **en ce qu'**un élément de ressort (8) est disposé autour de la tige (7).

2. Élément de palier selon la revendication 1, **caractérisé en ce que** l'élément de ressort (8) entourant la tige (7) comprend un ressort à coupelle ou un ressort à boudin.

3. Élément de palier selon la revendication 1 ou 2, **caractérise en ce que** les premiers et/ou les deuxièmes corps de roulement (1, 4) sont réalisées sous forme d'aiguilles.

4. élément de palier selon l'une quelconque des revendications 1 à 3, **caractérisé en ce que** les premiers et/ou les deuxièmes corps de roulement (1, 4) sont guidés par une cage (11, 12).

5. Élément de palier selon l'une quelconque des revendications 1 à 4, **caractérisé en ce que** la pièce intermédiaire (6) est réalisée sous forme plane.
